# EUROPEAN PATENT SPECIFICATION

(11) **EP 2 765 579 B1**
(45) Date of publication and mention of the grant of the patent: **29.03.2017**
(21) Application number: 14154924.6
(22) Date of filing: 12.02.2014
(51) Int. Cl.: G21C 9/004, G21D 3/06, G21C 13/02

(54) **Reactor pressure vessel depressurization system and main steam safety relief valve drive apparatus**
Reaktordruckbehälter-Druckentlastungssystem und Haupt-Dampfsicherheitsventil-Druckentlastungs-Antriebsvorrichtung
Système de dépressurisation de cuve de réacteur et appareil de commande principale de soupape de sûreté et de décharge à vapeur

(30) Priority: 12.02.2013 JP 2013024628
(43) Date of publication of application: 13.08.2014
(73) Proprietor: Kabushiki Kaisha Toshiba, Tokyo (JP)
(72) Inventor: Nishino, Koji, Tokyo (JP); Tokunaga, Takashi, Kanagawa (JP); Aoki, Yasutaka, Tokyo (JP); Sato, Takashi, Tokyo (JP); Sato, Ryohei, "deceased" (JP)
(74) Representative: Moreland, David

(56) References cited:
- JP-A- H0 545 489
- JP-A- 2001 004 788
- US-A1- 2011 249 784

## Description

### FIELD

Embodiments of the present invention relate to a reactor pressure vessel depressurization system and a main steam safety relief valve drive apparatus.

### BACKGROUND

Nuclear power plants are provided with main steam safety relief valves for the purpose of suppressing any excessive pressure rise in the reactor coolant pressure boundary and actively lowering the pressure in the reactor pressure vessel when a nuclear reactor accident occurs. Such method is disclosed in Japanese Patent Application Laid-Open Publication No. 2011-220822.

A main steam safety relief valve has a safety valve function of being opened as the spring in the inside of the main steam safety relief valve is pushed up by the pressure in the inside of the main steam piping system.

Furthermore, a main steam safety relief valve has a relief valve function and an automatic depressurization function because it is forcibly opened by the nitrogen gas that is supplied as a three way electromagnetic valve is magnetically excited.

In a boiling water reactor, the main steam safety relief valve functions as a relief valve so as to be forcibly opened to depressurize the inside of the reactor pressure vessel when the nuclear reactor falls into isolated state where the main steam isolation valve is closed.

Note that, when the nuclear power plant is in normal operation, no pressurization by nitrogen gas takes place and the pressurization line of the three way electromagnetic valve is held open to the inside of the reactor containment vessel. Hence the main steam safety relief valve is held to a closed state.

When the supply of nitrogen gas is interrupted due to a failure of the thee-way solenoid valve installed in the reactor containment vessel or a station blackout, the function of relief valve of a conventional main steam safety relief valve is lost to make it no longer possible to depressurize the inside of the reactor pressure vessel.

Therefore, when the function of high-pressure water injection is lost additionally, the function of low pressure water injection may no longer be exerted to give rise to a problem that the reactor core may possibly be damaged.

### BRIEF ESCRIPTION OF THE DRAWINGS

The features and advantages of the present invention will become apparent from the discussion hereinbelow of specific, illustrative embodiments thereof presented in conjunction with the accompanying drawings, wherein:
FIG. 1 is a schematic cross-sectional elevation view of the reactor pressure vessel depressurization system according to the first embodiment, illustrating the configuration thereof;
FIG. 2 is a schematic cross-sectional elevation view of the reactor pressure vessel depressurization system according to the second embodiment, showing the configuration thereof;
FIG. 3 is a schematic cross-sectional elevation view of the reactor pressure vessel depressurization system according to the modified second embodiment, illustrating the configuration thereof; and
FIG. 4 is a schematic cross-sectional elevation view of the reactor pressure vessel depressurization system according to the third embodiment, showing the configuration thereof.

### DETAILED DESCRIPTION

The object of the embodiments of the present invention is that the inside pressure of reactor pressure vessel is decreased to ensure low pressure water injection and suppress the possibility of damaging the reactor core.

According to an embodiment, there is provided a reactor pressure vessel depressurization system (110) for reducing pressure in a reactor pressure vessel (1) contained in a reactor containment vessel (4) of a nuclear reactor facility, the system (110) comprising: a main steam safety relief valve (6) arranged in the reactor containment vessel (4) to discharge steam in the reactor pressure vessel (1) into the reactor containment vessel (4) in an abnormal condition of the nuclear reactor facility; a main steam safety relief valve driving gas pipe (11) connected at a first end (61) thereof to the main steam safety relief valve (6) to lead first driving gas to the main steam safety relief valve (6); a three way electromagnetic valve (10) arranged in the reactor containment vessel (4) so as to be connected at a first connection port (10a) thereof to a second end (62) of the main steam safety relief valve driving gas pipe (11) opposite to the first end (61); a driving gas feed pipe (12) connected to a second connection port (10b) of the three way electromagnetic valve (10) to supply first drive gas from a supply source thereof; and a containment vessel external connection pipe (13) connected at a third end (63) thereof to a third connection port (10c) of the three way electromagnetic valve (10) and extending to outside of the reactor containment vessel (4) by way of a penetration section of the reactor containment vessel (4); wherein the three way electromagnetic valve (10) is switchably either in a first communication state in which the first connection port (10a) does not communicate with the third connection port (10c) but communicates with the second connection port (10b) or in a second communication state in which the first connection port (10a) does not communicate with the second connection port (10b) but communicates with the third connection port (10c), and is in the second communication state when the nuclear reactor facility is in normal operation; the containment vessel external connection pipe (13) has: an open communication section (14) formed either at inside or at the outside of the reactor containment vessel (4) so as to be open in normal operation of the nuclear reactor facility and be capable of being shifted into a closed state; and an external gas receiving section (15) capable of receiving second driving gas from a pressurization source (50) outside of the reactor containment vessel (4); and the main steam safety relief valve (6) can be opened by second driving gas supplied from the pressurization source (50) in a state where the open communication section (14) is not opened and in the second communication state.

According to an embodiment, there is provided a reactor pressure vessel depressurization system (110) for reducing pressure in a reactor pressure vessel (1) contained in a reactor containment vessel (4) of a nuclear reactor facility, the system (110) comprising: a main steam safety relief valve (6) arranged in the reactor containment vessel (4) to discharge steam in the reactor pressure vessel (1) into the reactor containment vessel (4) in an abnormal condition of the nuclear reactor facility; a main steam safety relief valve driving gas pipe (11) connected at a first end (61) thereof to the main steam safety relief valve (6) to lead first driving gas to the main steam safety relief valve (6); a three way electromagnetic valve (10) arranged in the reactor containment vessel (4) so as to be connected at a first connection port (10a) thereof to a second (62) end of the main steam safety relief valve driving gas pipe (11) opposite to the first end (61); a driving gas feed pipe (12) connected to a second connection port (10b) of the three way electromagnetic valve (10) to supply first drive gas from a supply source thereof; and a containment vessel external connection pipe (13) connected at a third end (63) thereof to the third connection port (10c) of the three way electromagnetic valve (10) and extending to outside of the reactor containment vessel (4) by way of a penetration section of the reactor containment vessel (4); wherein the three way electromagnetic valve (10) is switchably either in a first communication state in which the first connection port (10a) does not communicate with the third connection port (10c) but communicates with the second connection port (10b), or in a second communication state in which the first connection port (10a) does not communicate with the second connection port (10b) but communicates with the third connection port (10c), and is in the second communication state when the nuclear reactor facility is in normal operation; the containment vessel external connection pipe (13) has: an open communication section (14) formed at inside of the reactor containment vessel (4) so as to be open when the nuclear reactor facility is in normal operation and capable of being shifted into a closed state; an external gas receiving section (15) arranged at a fourth end (64) of the containment vessel external connection pipe (13) opposite to the third end (63) thereof connected to the third connection port (10c) so as to be capable of receiving second driving gas from a pressurization source (50) arranged outside of the reactor containment vessel (4); a pressurization type shutoff valve (42) for shifting the open communication section (14) into a closed state as it is closed under the pressure of second driving gas; a safety valve (41) arranged between the three way electromagnetic valve (10) and the external gas receiving section (15) of the containment vessel external connection pipe (13) and is configured to be opened by pressure from the external gas receiving section (15); and a shutoff valve driving pipe (44) connecting the containment vessel external connection pipe (13) extending between the safety valve (41) and the external gas receiving section (15) and the drive section of the pressurization type shutoff valve (42); such that the main steam safety relief valve (6) can be opened by supplying second driving gas from the pressurization source (50) in a state where the open communication section (14) is not opened and in the second communication state.

According to an embodiment, there is provided a main steam safety relief valve drive apparatus (120) for driving a main steam safety relief valve (6) for discharging the steam in a reactor pressure vessel (1) into the reactor containment vessel (4), the apparatus (120) comprising: a main steam safety relief valve driving gas pipe (11) connected at a first end (61) thereof to the main steam safety relief valve (6) to lead first driving gas to the main steam safety relief valve (6); a three way electromagnetic valve (10) arranged in the reactor containment vessel (4) so as to be connected at the first connection port (10a) thereof to a second end (62) of the main steam safety relief valve driving gas pipe (11) opposite to the first end (61); a driving gas feed pipe (12) connected to a second connection port (10b) of the three way electromagnetic valve (10) to supply first drive gas from a supply source thereof; and a containment vessel external connection pipe (13) connected at a third end (63) thereof to the third connection port (10c) of the three way electromagnetic valve (10) and extending to outside of the reactor containment vessel (4) by way of a penetration section of the reactor containment vessel (4); wherein the three way electromagnetic valve (10) is switchably either in the first communication state in which the first connection port (10a) does not communicate with the third connection port (10c) but communicates with the second connection port (10b) or in the second communication state in which the first connection port (10a) does not communicate with the second connection port (10b) but communicates with the third connection port (10c); the containment vessel external connection pipe (13) has: an open communication section (14) formed either at inside or at the outside of the reactor containment vessel (4) so as to be open when the nuclear reactor facility is in normal operation and capable of being shifted into a closed state; and an external gas receiving section (15) capable of receiving second driving gas from the outside of the reactor containment vessel (4).

Now, embodiments of reactor pressure vessel depressurization system and those of main steam safety relief valve drive apparatus according to the present invention will be described by referring to the accompanying drawings. Throughout the drawings, the same or similar components are denoted by the same reference symbols and will not be described repeatedly.

### [FIRST EMBODIMENT]

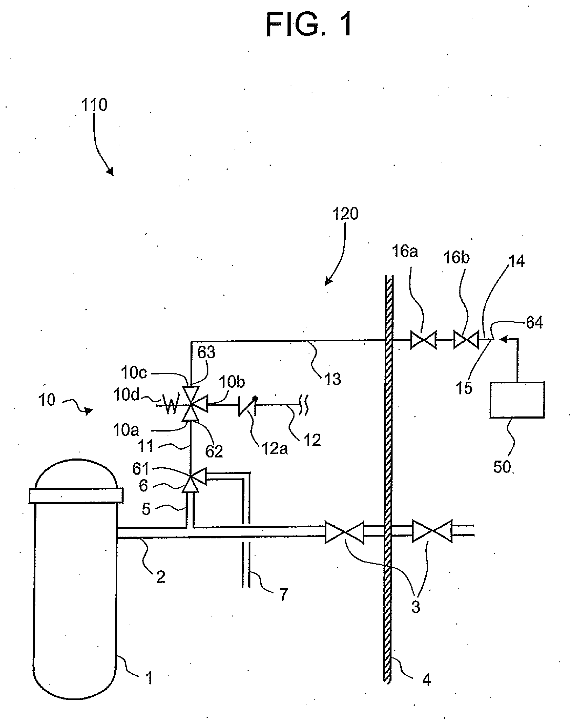

FIG. 1 is a schematic cross-sectional elevation view of the reactor pressure vessel depressurization system according to the first embodiment, illustrating the configuration thereof.

A nuclear reactor facility has a reactor pressure vessel 1 and a reactor containment vessel 4 containing the reactor pressure vessel 1.

The main steam pipe 2 for leading main steam to a turbine system (not shown) is connected to the reactor pressure vessel 1. The main steam pipe 2 runs through the reactor containment vessel 4 and is connected to a steam turbine (not shown). Two main steam isolation valves 3 are arranged on the main steam pipe 2 respectively upstream and downstream relative to the penetration section of the reactor containment vessel 4 where the main steam pipe 2 runs through and hence at the inside and at the outside of the reactor containment vessel 4.

The reactor pressure vessel depressurization system 110 has a main steam safety relief valve 6 and a main steam safety relief valve drive apparatus 120.

The main steam safety relief valve 6 is arranged at an end of the main steam branch pipe 5 that is branched from a part of the main steam pipe 2 disposed between the reactor pressure vessel 1 and the inside main steam isolation valve 3. When the main steam safety relief valve 6 is brought into operation, main steam is discharged, for example, into the pressure suppression pool (not shown) in the reactor containment vessel 4 by way of an exhaust pipe 7.

The main steam safety relief valve drive apparatus 120 is provided to make the main steam safety relief valve 6 operate for the relief valve function and the automatic depressurization function thereof.

The main steam safety relief valve drive apparatus 120 has a main steam safety relief valve driving gas pipe 11 connected at an end thereof to the main steam safety relief valve 6 so as to lead driving gas to the main steam safety relief valve 6. The main steam safety relief valve drive apparatus 120 also has a three way electromagnetic valve 10 arranged in the reactor containment vessel 4 and connected at its first connection port 10a thereof to the other end of the main steam safety relief valve driving gas pipe 11, which is the end (second end) 62 of the main steam safety relief valve driving gas pipe 11 opposite to the end (first end) 61 thereof to which the main steam safety relief valve 6 is connected.

The three way electromagnetic valve 10 has three connection ports to be connected to the outside including a first connection port 10a, a second connection port 10b and a third connection port 10c. The three way electromagnetic valve 10 also has a solenoid 10d for switching the three way electromagnetic valve 10.

Additionally, pipes are connected to each of the connection ports of the three way electromagnetic valve 10.

More specifically, the main steam safety relief valve driving gas pipe 11 is connected to the first connection port 10a of the three way electromagnetic valve 10. The main steam safety relief valve 6 is connected to the end (first end) 61 of the main steam safety relief valve driving gas pipe 11 opposite to the end (second end) 62 thereof connected to the first connection port 10a.

A driving gas feed pipe 12 for supplying driving gas from a supply source to the three way electromagnetic valve 10 is connected to the second connection port 10b. Note that the driving gas supply source that is connected to the driving gas feed pipe 12 is omitted from FIG. 1. The driving gas feed pipe 12 is provided with a driving gas feed check valve 12a to prevent driving gas from flowing out from the main steam safety relief valve driving gas pipe 11 through the driving gas feed pipe 12 even if the driving gas supply source is damaged after driving gas to the side of the main steam safety relief valve driving gas pipe 11 is supplied.

The inside of the reactor containment vessel 4 is filled with nitrogen gas so long as the nuclear reactor facility is in normal operation. Nitrogen gas may also be employed as driving gas.

A containment vessel external connection pipe 13 is connected to the third connection port 10c. The end (fourth end) 64 of the containment vessel external connection pipe 13 opposite to the end (third end) 63 thereof that is connected to the third connection port 10c extends to the outside of the reactor containment vessel 4 via a penetration section of the reactor containment vessel 4.

A hermetically sealed condition is secured between the containment vessel external connection pipe 13 and the reactor containment vessel 4 at the wall part of the reactor containment vessel 4 where the containment vessel external connection pipe 1 runs through.

An open communication section 14 that is in communication with the external atmosphere of the reactor containment vessel 4 is arranged at the end (fourth end) 64 of the containment vessel external connection pipe 13 opposite to the end (third end) 63 thereof that is connected to the third connection port 10c so that the containment vessel external connection pipe 13 is open to the external atmosphere.

An external gas receiving section 15 is also arranged at the opposite end (fourth end) 64 of the containment vessel external connection pipe 13 so as to be connectable to a pressurized gas supply source 50. The pressurized gas supply source 50 may be a permanent service system or, alternatively, a compressed gas cylinder may be used as pressurized gas supply source.

The pressurized gas supply source 50 may also be used for supplying driving gas by way of the driving gas feed pipe 12 provided that the driving gas supplying function is secured by, for example, an installed reservoir tank in the event of loss of driving gas supply from the driving gas feed pipe 12.

The containment vessel external connection pipe 13 is provided at the outside of the reactor containment vessel 4 with isolation valves 16a and 16b.
Thus, if the containment vessel external connection pipe 13 is damaged in the inside of the reactor containment vessel 4, the part of the containment vessel external connection pipe 13 that is located outside the reactor containment vessel 4 may not be affected by the damage.

Both the isolation valves 16a and 16b may be manually control valves. If they are remote-control valves, they can be operated remotely without requiring one or more operators to go to the sites of installation of the valves. It is preferable that they can also be operated manually.

Both the isolation valves 16a and 16b illustrated in FIG. 1 are arranged outside containment vessel 4. As another example, the isolation valves 16a and 16b may be arranged respectively inside and outside the reactor containment vessel 4. Or both of them may be arranged inside the reactor containment vessel 4. Whichever one of the alternatives may be chosen as a matter of design.

The three way electromagnetic valve 10 can be switched from the first communication state where the solenoid 10d is magnetically excited to the second communication state where the solenoid 10d is magnetically unexcited or vice versa.

In the first communication state, the first connection port 10a and the third connection port 10c do not communicate with each other, whereas the first connection port 10a and the second connection port 10b communicate with each other.

In the second communication state, on the other hand, the first connection port 10a and the second connection port 10b do not communicate with each other, whereas the first connection port 10a and the third connection port 10c communicate with each other.

Now, the operation of this embodiment will be described below.

When the nuclear reactor facility is in normal operation, the solenoid 10d of the three way electromagnetic valve 10 is in a state of being magnetically unexcited. Therefore, the three way electromagnetic valve 10 is in the second communication state, where the first connection port 10a and the third connection port 10c communicate with each other.

So, the main steam safety relief valve driving gas pipe 11 connected to the first connection port 10a is held in communication with the containment vessel external connection pipe 13 that is connected to the third connection port 10c.

In this condition, as a result of that both the isolation valves 16a and 16b are held in a state of being open, the main steam safety relief valve driving gas pipe 11 communicates with the open communication section 14 so that the pressure of driving gas is not applied to the main steam safety relief valve 6 while the main steam safety relief valve 6 exerts neither the relief valve function nor the automatic depressurization function and hence the main steam safety relief valve 6 is in a closed state.

When the main steam safety relief valve 6 is required to exert the relief valve function and the automatic depressurization function, the solenoid 10d of the three way electromagnetic valve 10 is magnetically excited. As the solenoid 10d operates normally, the three way electromagnetic valve 10 is switched to the first communication state where the first connection port 10a and the second connection port 10b communicate with each other.

Therefore, the main steam safety relief valve driving gas pipe 11 that is connected to the first connection port 10a is brought into a state where it communicates with the driving gas feed pipe 12 that is connected to the second connection port 10b.

Thus, driving gas coming from the supply source thereof (not shown) is supplied from the driving gas feed pipe 12 to the main steam safety relief valve 6 by way of the main steam safety relief valve driving gas pipe 11 to pressurize the main steam safety relief valve 6. Then, as a result, the main steam safety relief valve 6 is driven to operate.

On the other hand, if the three way electromagnetic valve 10 drifts into failure, if the power supply thereof is lost or if the supply of nitrogen gas is interrupted so that it is no longer possible to pressurize the main steam safety relief valve 6 from the side of the driving gas feed pipe 12, it is possible to pressurize the main steam safety relief valve 6 by the diving gas from the external gas receiving section 15 of the containment vessel external connection pipe 13.

Since the external gas receiving section 15 is made to be connectable with the pressurized gas supply source 50, it is possible to pressurize the main steam safety relief valve 6 by means of driving gas by connecting the external gas receiving section 15 with the pressurized gas supply source 50.

By connecting the external gas receiving section 15 to the pressurized gas supply source 50, the communication between the open communication section 14 and the external atmosphere is interrupted, so that driving gas that is being supplied to the external gas receiving section 15 would never leak out to the atmosphere outside the system.

As a result, now the main steam safety relief valve 6 can exert the relief valve function and the automatic depressurization function to achieve depressurization of the reactor pressure vessel 1.

As described above, this embodiment of the present invention can reliably depressurize the inside of the reactor pressure vessel to ensure low pressure water injection and suppress the possibility of damaging the reactor core.

### [SECOND EMBOSIMENT]

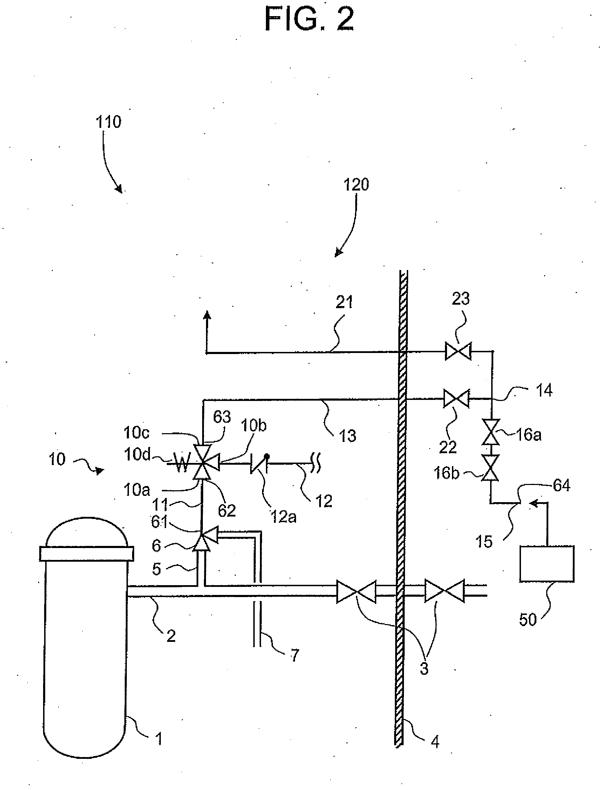

FIG. 2 is a schematic cross-sectional elevation view of the second embodiment of reactor pressure vessel depressurization system, showing the configuration thereof.

This embodiment is a modification to the first embodiment. In this embodiment, the open communication section 14 is arranged at a middle part of the containment vessel external connection pipe 13.

An open pipe 21 is connected to the open communication section 14. The open pipe 21 extends through the wall of the reactor containment vessel 4. The end of the open piping 21 opposite to the end thereof that is connected to the open communication section 14 is open to the inside of the reactor containment vessel 4.

This embodiment may further be modified such that said end of the open piping 21 is open to the outside of the reactor containment vessel 4 and the open piping 21 does not extend through the wall of the reactor containment vessel 4.

As shown in FIG. 2, when the open pipe 21 is made to be open to the inside of the reactor containment vessel 4 like the conventional arrangement, the combination of the containment vessel external connection pipe 13 and the open pipe 21 form an external closed loop so that the boundary of the reactor containment vessel 4 can more reliably be formed.

The open pipe 21 is provided outside of the reactor containment vessel 4 with an opening stop valve 23. A pressurization stop valve 22 is arranged at a part of the external connection pipe 13 located between the three way electromagnetic valve 10 and the open communication section 14, and outside the reactor containment vessel 4.

Both the pressurization stop valve 22 and the opening stop valve 23 may be manually control valves. If they are remote-control valves, they can be operated remotely without requiring operators to go to the sites of installation of the valves. It is preferable that they can be operated manually at their sites.

Now, the operation of this embodiment having the above described configuration will be described below.

When the nuclear reactor facility is in normal operation, the main steam safety relief valve 6 maintains a closed state as both the pressurization stop valve 22 and the opening stop valve 23 are held to a closed state while both the isolation valves 16a and 16b are also held to a closed state.

When the main steam safety relief valve 6 is required to exert the relief valve function and the automatic depressurization function, the solenoid 10d of the three way electromagnetic valve 10 is magnetically excited so that the three way electromagnetic valve 10 is switched to the first communication state where the first connection port 10a and the second connection port 10b communicate with each other.

As a result, driving gas is supplied to the main steam safety relief valve 6 to pressurize the main steam safety relief valve 6 so that the main steam safety relief valve 6 starts to operate.

On the other hand, if the three way electromagnetic valve 10 drifts into failure, if the power supply thereof is lost or if the supply of nitrogen gas is interrupted, it would no longer be possible to pressurize the main steam safety relief valve 6 from the side of the driving gas feed pipe 12. In such a case, it would be possible to pressurize the main steam safety relief valve 6 from the external gas receiving section 15 of the containment vessel external connection pipe 13.

In such case, the opening stop valve 23 would be closed, and the external gas receiving section 15 and the pressurized gas supply source 50 would be connected to each other. Thus, the isolation valves 16a and 16b would be opened. Thus the main steam safety relief valve 6 would be pressurized by the driving gas. As a result, the main steam safety relief valve 6 is driven to operate.

As described above, this embodiment of the present invention can reliably depressurize the inside of the reactor pressure vessel to ensure low pressure water injection and suppress the possibility of damaging the reactor core.

In this embodiment, a pressurization stop valve 22 is provided from the viewpoint of reliably isolating the nuclear reactor in an abnormal condition. But the above described function can be realized without providing a pressurization stop valve 22. The extent of isolation that needs to be established when an abnormal condition occurs may be determined in the design stages of the nuclear reactor facility.

While both the pressurization stop valve 22 and the opening stop valve 23 are arranged outside the reactor containment vessel 4 so that each of the pressurization stop valve 22 and the opening stop valve 23 may be manually operable in the above description of this embodiment, the above described function can be realized if they are arranged inside the reactor containment vessel 4.

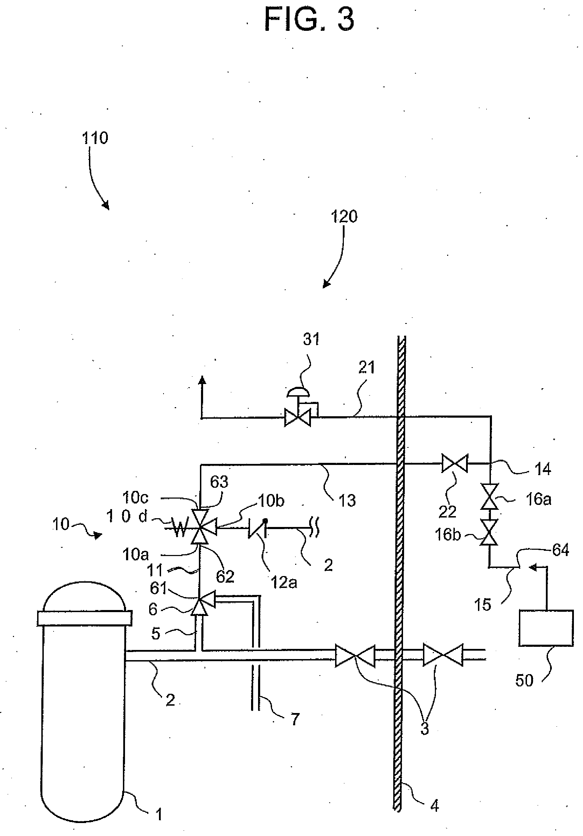

FIG. 3 is a schematic cross-sectional elevation view of a modified second embodiment of reactor pressure vessel depressurization system, showing the configuration thereof.

As shown in FIG. 3, a self-operated shutoff valve 31 may be arranged at an inside part of the reactor containment vessel 4 part of the open pipe 21 instead of the opening stop valve 23 of the second embodiment.

While the self-operated shutoff valve 31 is arranged inside the reactor containment vessel 4 in FIG. 3, the self-operated shutoff valve 31 may alternatively be arranged at the part of the open pipe 21 outside of the reactor containment vessel 4.

The self-operated shutoff valve 31 is closed by itself when the pressure of the open pipe 21 rises to a predetermined pressure level at the side of the open communication section 14.

Therefore, as the external gas receiving section 15 is connected to the pressurized gas supply source 50 to introduce driving gas and the pressure of the open piping 21 rises at the side of the open communication section 14, the self-operated shutoff valve 31 is closed by itself.

Then, as a result, the valve switching operation for closing the open side is no longer necessary once driving gas is introduced.

In place of the pressurization stop valve 22 and the opening stop valve 23 in the second embodiment (FIG.2), a three way electromagnetic valve may be arranged at the part of the open communication section 14 where it is branched to the external gas receiving section 15 as still another modified embodiment.

### [THIRD EMBODIMENT]

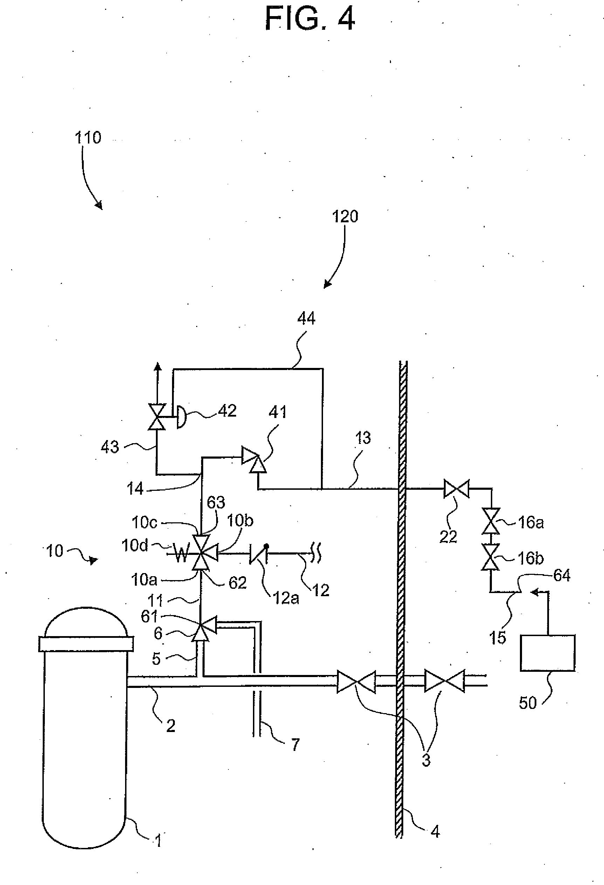

FIG. 4 is a schematic cross-sectional elevation view of the third embodiment of reactor pressure vessel depressurization system, showing the configuration thereof. This embodiment is a modification to the first embodiment.

In this embodiment, a safety valve 41 is arranged at a inside part of the reactor containment vessel 4 in the containment vessel external connection pipe 13. The safety valve 41 is opened when the pressure of the safety valve 41 exceeds a predetermined pressure level at the side of the external gas receiving section 15.

Additionally, the open communication section 14 is arranged at a part located between the three way electromagnetic valve 10 and the safety valve 41 of the containment vessel external connection pipe 13. An open pipe 43 is connected to the open communication section 14. The end of the open pipe 43 that is opposite to the end of the open pipe 43 connected to the open communication section 14 is held open to the inside of the reactor containment vessel 4.

A pressurization type shutoff valve 42 is arranged at the open pipe 43. The pressurization type shutoff valve 42 is automatically closed when the pressure of the gas being supplied to the drive section thereof exceeds a predetermined pressure level. The pressure level at which the pressurization type shutoff valve 42 is closed is set to a value lower than the pressure level at which the safety valve 41 is driven to operate.

Additionally, a pressure transmission pipe 44 is branched from the part located between the open communication section 14 and the pressurization stop valve 23 and connected to the drive section of the pressurization type shutoff valve 42, of the containment vessel external connection pipe 13.

Now, the operation of this embodiment having the above described configuration will be described below.

When the nuclear reactor facility is in normal operation, as a result of the fact that the isolation valves 16a and 16b are held in a state of being closed, the safety valve 41 is in a closed state and the pressurization type shutoff valve 42 is in an open state because the internal pressure of the containment vessel external connection piping 13 still has not been raised.

Therefore, when the nuclear reactor facility is in normal operation, the inside of the main steam safety relief valve driving gas pipe 11 is held in communication with the atmosphere in the reactor containment vessel 4 by way of the three way electromagnetic valve 10 and the open pipe 43, so the main steam safety relief valve 6 maintains a closed state.

If the three way electromagnetic valve 10 drifts into failure, if the power supply thereof is lost or if the supply of nitrogen gas is interrupted so that it is no longer possible to pressurize the main steam safety relief valve 6 from the side of the driving gas feed pipe 12, when the main steam safety relief valve 6 is supposed to exert the relief valve function and the automatic depressurization function, it is possible to pressurize the main steam safety relief valve 6 from the external gas receiving section 15 of the containment vessel external connection pipe 13.

In such case, driving gas is filled into the containment vessel external connection pipe 13 as the external gas receiving section 15 and the pressurized gas supply source 50 are connected to each other and both the isolation valves 16a and 16b are opened. Then, the internal pressure of the containment vessel external connection pipe 13 rises because it then does not have any opening.

When the pressure exceeds the pressure level at which the pressurization type shutoff valve 42 is closed, the pressurization type shutoff valve 42 is closed by itself. As the pressure rises further to exceed a predetermined pressure level at which the safety valve 41 is driven to operate, the safety valve 41 is driven to operate as a matter of course.

As the safety valve 41 is driven to operate and becomes open, driving gas flows from the pressurized gas supply source 50 to the three way electromagnetic valve 10. In this state, the pressure inside the containment vessel external connection pipe 13 is still above the pressure level at which the pressurization type shutoff valve 42 is closed so that the pressurization type shutoff valve 42 maintains a closed state.

Then, as a result, pressure is applied to the main steam safety relief valve 6 by way of the three way electromagnetic valve 10 to drive the main steam safety relief valve 6 to operate.

As described above, this embodiment can produce a pressurized condition for the main steam safety relief valve 6 without operating valves other than the isolation valves 16a and 16b so that the inside of the reactor pressure vessel 1 can reliably be depressurized to ensure low pressure water injection and hence the possibility of damaging the reactor core can be suppressed.

### [OTHER EMBODIMENTS]

While the present invention is described above by way of several embodiments, the above described embodiments are presented only as examples without any intention of limiting the scope of the present invention.

Any of the characteristic features of two or more than two of the above described embodiments may be combined for use.

Furthermore, the above described embodiments may be modified in various different ways.

## Claims

1. A reactor pressure vessel depressurization system (110) for reducing pressure in a nuclear reactor facility, the system (110) comprising:
a reactor pressure vessel (1) contained in a reactor containment vessel (4) and a main steam safety relief valve (6) arranged in the reactor containment vessel (4) to discharge steam in the reactor pressure vessel (1) into the reactor containment vessel (4) in an abnormal condition of the nuclear reactor facility;
a main steam safety relief valve driving gas pipe (11) connected at a first end (61) thereof to the main steam safety relief valve (6) to lead first driving gas to the main steam safety relief valve (6);
a three way electromagnetic valve (10) arranged in the reactor containment vessel (4) so as to be connected at a first connection port (10a) thereof to a second end (62) of the main steam safety relief valve driving gas pipe (11) opposite to the first end (61);
a driving gas feed pipe (12) connected to a second connection port (10b) of the three way electromagnetic valve (10) to supply first drive gas from a supply source thereof; and
a containment vessel external connection pipe (13) connected at a third end (63) thereof to a third connection port (10c) of the three way electromagnetic valve (10) and extending to outside of the reactor containment vessel (4) by way of a penetration section of the reactor containment vessel (4); wherein
the three way electromagnetic valve (10) is switchably either in a first communication state in which the first connection port (10a) does not communicate with the third connection port (10c) but communicates with the second connection port (10b) or in a second communication state in which the first connection port (10a) does not communicate with the second connection port (10b) but communicates with the third connection port (10c), and is in the second communication state when the nuclear reactor facility is in normal operation;
the containment vessel external connection pipe (13) has:
an open communication section (14) formed either at inside or at the outside of the reactor containment vessel (4) so as to be open in normal operation of the nuclear reactor facility and be capable of being shifted into a closed state, and
an external gas receiving section (15) capable of receiving second driving gas from a pressurization source (50) outside of the reactor containment vessel (4), and
the main steam safety relief valve (6) can be opened by second driving gas supplied from the pressurization source (50) in a state where the open communication section (14) is not opened and in the second communication state.

2. The reactor pressure vessel depressurization system (110) according to claim 1, wherein
the external gas receiving section (15) is arranged at a fourth end (64) of the containment vessel external connection pipe (13) opposite to the third end (63) thereof that is connected to the third connection port (10c), and
the open communication section (14) is at the fourth end (64) of the containment vessel external connection pipe (13).

3. The reactor pressure vessel depressurization system (110) according to claim 1, wherein
the external gas receiving section (15) is arranged at a fourth end (64) of the containment vessel external connection pipe (13) opposite to the third end (63) thereof that is connected to the third connection port (10c);
the open communication section (14) is arranged outside the reactor containment vessel (4); and
the system (110) further comprises:
an open pipe (21) connected to the open communication section (14) and extending to the inside of the reactor containment vessel (4) so as to be open in the inside of the reactor containment vessel (4), and
an opening stop valve (23) arranged at a part of the open pipe (21) located outside the reactor containment vessel (4).

4. The reactor pressure vessel depressurization system (110) according to claim 1, wherein
the external gas receiving section (15) is arranged at a fourth end (64) of the containment vessel external connection pipe (13) opposite to the third end (63) thereof that is connected to the third connection port (10c);
the open communication section (14) is arranged outside the reactor containment vessel (4); and
the system (110) further comprises:
an open pipe (21) connected to the open communication section (14) and extending to the inside of the reactor containment vessel (4) so as to be open in the inside of the reactor containment vessel (4); and
a self-operated shutoff valve (31) arranged at the open pipe (21) so as to become closed by itself as upstream pressure thereof rises.

5. The reactor pressure vessel depressurization system (110) according to claim 1, wherein
the external gas receiving section (15) is arranged at a fourth end (64) of the containment vessel external connection pipe (13) opposite to the third end (63) thereof that is connected to the third connection port (10c);
the system (110) further comprises:
an open pipe (43) connected to the open communication section (14) and held open in the inside of the reactor containment vessel (4);
a pressurization type shutoff valve (42) arranged at the open pipe (43) so as to be closed as the pressure of second drive gas rises;
a safety valve (41) arranged between the open communication section (14) and the external gas receiving section (15) of the containment vessel external connection pipe (13) and configured to be opened by pressure from the external gas receiving section (15); and
a shutoff valve driving pipe (44) connecting the containment vessel external connection pipe (13), which extends between the safety valve (41) and the external gas receiving section (15), and the drive section of the pressurization type shutoff valve (42).

6. The reactor pressure vessel depressurization system (110) according to claim 1, wherein the open communication section (14) is formed inside the reactor containment vessel (4) ;
and the external gas receiving section (15) is arranged at a fourth end (64) of the containment vessel external connection pipe (13) opposite to the third end (63) thereof connected to the third connection port (10c).

7. A main steam safety relief valve drive apparatus (120) for driving a main steam safety relief valve (6) for discharging the steam in a reactor pressure vessel (1) into the reactor containment vessel (4), the apparatus (120) comprising:
a main steam safety relief valve driving gas pipe (11) connected at a first end (61) thereof to the main steam safety relief valve (6) to lead first driving gas to the main steam safety relief valve (6);
a three way electromagnetic valve (10) arranged in the reactor containment vessel (4) so as to be connected at the first connection port (10a) thereof to a second end (62) of the main steam safety relief valve driving gas pipe (11) opposite to the first end (61);
a driving gas feed pipe (12) connected to a second connection port (10b) of the three way electromagnetic valve (10) to supply first drive gas from a supply source thereof; and
a containment vessel external connection pipe (13) connected at a third end (63) thereof to the third connection port (10c) of the three way electromagnetic valve (10) and extending to outside of the reactor containment vessel (4) by way of a penetration section of the reactor containment vessel (4); wherein
the three way electromagnetic valve (10) is switchably either in the first communication state in which the first connection port (10a) does not communicate with the third connection port (10c) but communicates with the second connection port (10b) or in the second communication state in which the first connection port (10a) does not communicate with the second connection port (10b) but communicates with the third connection port (10c);
the containment vessel external connection pipe (13) has:
an open communication section (14) formed either at inside or at the outside of the reactor containment vessel (4) so as to be open when the nuclear reactor facility is in normal operation and capable of being shifted into a closed state; and
an external gas receiving section (15) capable of receiving second driving gas from the outside of the reactor containment vessel (4).

## Patentansprüche

1. Reaktordruckbehälter-Druckentlastungssystem (110) zur Verringerung des Drucks in einer Kernreaktoranlage, wobei das System (110) Folgendes umfasst:
einen Reaktordruckbehälter (1), der in einem Reaktorsicherheitsbehälter (4) eingeschlossen ist, und eine Haupt-Dampfsicherheitsventil-Druckentlastung (6), die in dem Reaktorsicherheitsbehälter (4) angeordnet ist, um bei einem abnormen Zustand der Kernreaktoranlage Dampf im Reaktordruckbehälter (1) in den Reaktorsicherheitsbehälter (4) auszustoßen;
eine Haupt-Dampfsicherheitsventil-Druckentlastungs-Antriebsgasleitung (11), die an einem ersten Ende (61) davon an die Haupt-Dampfsicherheitsventil-Druckentlastung (6) angeschlossen ist, um erstes Antriebsgas zu der Haupt-Dampfsicherheitsventil-Druckentlastung (6) zu leiten;
ein elektromagnetisches Dreiweg-Ventil (10), das in dem Reaktorsicherheitsbehälter (4) angeordnet ist, um an einem ersten Verbindungsanschluss (10a) davon an ein zweites Ende (62) der Haupt-Dampfsicherheitsventil-Druckentlastungs-Antriebsgasleitung (11) gegenüber dem ersten Ende (61) angeschlossen zu sein;
eine Antriebsgaszuleitung (12), die an einen zweiten Verbindungsanschluss (10b) des elektromagnetischen Dreiweg-Ventils (10) angeschlossen ist, um erstes Antriebsgas aus einer Versorgungsquelle davon zuzuführen; und
eine externe Sicherheitsbehälter-Anschlussleitung (13), die an einem dritten Ende (63) davon an einen dritten Verbindungsanschluss (10c) des elektromagnetischen Dreiweg-Ventils (10) angeschlossen ist und zur Außenseite des Reaktorsicherheitsbehälters (4) mittels eines Eindringabschnitts des Reaktorsicherheitsbehälters (4) verläuft; wobei
das elektromagnetische Dreiweg-Ventil (10) entweder in einen ersten Kommunikationszustand, in welchem der erste Verbindungsanschluss (10a) nicht mit dem dritten Verbindungsanschluss (10c) kommuniziert, aber mit dem zweiten Verbindungsanschluss (10b) kommuniziert, oder in einen zweiten Kommunikationszustand, in welchem der erste Verbindungsanschluss (10a) nicht mit dem zweiten Verbindungsanschluss (10b) kommuniziert, aber mit dem dritten Verbindungsanschluss (10c) kommuniziert, schaltbar ist, und sich im zweiten Kommunikationszustand befindet, wenn die Kernreaktoranlage im Normalbetrieb ist;
die externe Sicherheitsbehälter-Anschlussleitung (13) Folgendes aufweist:
einen offenen Kommunikationsabschnitt (14), der entweder an der Innenseite oder an der Außenseite des Reaktorsicherheitsbehälters (4) gebildet ist, um im Normalbetrieb der Kernreaktoranlage offen zu sein und in einen geschlossenen Zustand versetzt werden zu können, und
einen externen Gasaufnahmeabschnitt (15), der fähig ist, zweites Antriebsgas aus einer Druckbeaufschlagungsquelle (50) außerhalb des Reaktorsicherheitsbehälters (4) aufzunehmen, und
die Haupt-Dampfsicherheitsventil-Druckentlastung (6) durch aus der Druckbeaufschlagungsquelle (50) zugeführtes zweites Antriebsgas in einem Zustand, wo der offene Kommunikationsabschnitt (14) nicht geöffnet ist, und in dem zweiten Kommunikationszustand geöffnet werden kann.

2. Reaktordruckbehälter-Druckentlastungssystem (110) nach Anspruch 1, wobei
der externe Gasaufnahmeabschnitt (15) an einem vierten Ende (64) der externen Sicherheitsbehälter-Anschlussleitung (13) gegenüber dem dritten Ende (63) davon, das an den dritten Verbindungsanschluss (10c) angeschlossen ist, angeordnet ist, und
sich der offene Kommunikationsabschnitt (14) am vierten Ende (64) der externen Sicherheitsbehälter-Anschlussleitung (13) befindet.

3. Reaktordruckbehälter-Druckentlastungssystem (110) nach Anspruch 1, wobei
der externe Gasaufnahmeabschnitt (15) an einem vierten Ende (64) der externen Sicherheitsbehälter-Anschlussleitung (13) gegenüber dem dritten Ende (63) davon, das an den dritten Verbindungsanschluss (10c) angeschlossen ist, angeordnet ist;
der offene Kommunikationsabschnitt (14) außerhalb des Reaktorsicherheitsbehälters (4) angeordnet ist; und
das System (110) ferner Folgendes umfasst:
eine offene Leitung (21), die an den offenen Kommunikationsabschnitt (14) angeschlossen ist und zum Inneren des Reaktorsicherheitsbehälters (4) verläuft, um im Inneren des Reaktorsicherheitsbehälters (4) offen zu sein, und
ein sich öffnendes Absperrventil (23), das an einem Teil der offenen Leitung (21), der sich außerhalb des Reaktorsicherheitsbehälters (4) befindet, angeordnet ist.

4. Reaktordruckbehälter-Druckentlastungssystem (110) nach Anspruch 1, wobei
der externe Gasaufnahmeabschnitt (15) an einem vierten Ende (64) der externen Sicherheitsbehälter-Anschlussleitung (13) gegenüber dem dritten Ende (63) davon, das an den dritten Verbindungsanschluss (10c) angeschlossen ist, angeordnet ist;
der offene Kommunikationsabschnitt (14) außerhalb des Reaktorsicherheitsbehälters (4) angeordnet ist; und
das System (110) ferner Folgendes umfasst:
eine offene Leitung (21), die an den offenen Kommunikationsabschnitt (14) angeschlossen ist und zum Inneren des Reaktorsicherheitsbehälters (4) verläuft, um im Inneren des Reaktorsicherheitsbehälters (4) offen zu sein; und
ein selbstbetätigtes Sperrventil (31), das an der offenen Leitung (21) angeordnet ist, um durch sich selbst geschlossen zu werden, da der nachgeschaltete Druck davon ansteigt.

5. Reaktordruckbehälter-Druckentlastungssystem (110) nach Anspruch 1, wobei
der externe Gasaufnahmeabschnitt (15) an einem vierten Ende (64) der externen Sicherheitsbehälter-Anschlussleitung (13) gegenüber dem dritten Ende (63) davon, das an den dritten Verbindungsanschluss (10c) angeschlossen ist, angeordnet ist;
das System (110) ferner Folgendes umfasst:
eine offene Leitung (43), die an den offenen Kommunikationsabschnitt (14) angeschlossen ist und im Inneren des Reaktorsicherheitsbehälters (4) offengehalten wird;
ein Druckbeaufschlagungs-Sperrventil (42), das an der offenen Leitung (43) angeordnet ist, um geschlossen zu werden, da der Druck des zweiten Antriebsgases ansteigt;
ein Sicherheitsventil (41), das zwischen dem offenen Kommunikationsabschnitt (14) und dem externen Gasaufnahmeabschnitt (15) der externen Sicherheitsbehälter-Anschlussleitung (13) angeordnet und konfiguriert ist, um durch Druck aus dem externen Gasaufnahmeabschnitt (15) geöffnet zu werden; und
eine Sperrventil-Antriebsleitung (44), die die externe Sicherheitsbehälter-Anschlussleitung (13), welche zwischen dem Sicherheitsventil (41) und dem externen Gasaufnahmeabschnitt (15) und dem Antriebsabschnitt des Druckbeaufschlagungs-Sperrventils (42) verläuft, verbindet.

6. Reaktordruckbehälter-Druckentlastungssystem (110) nach Anspruch 1, wobei der offene Kommunikationsabschnitt (14) innen im Reaktorsicherheitsbehälter (4) gebildet wird; und der externe Gasaufnahmeabschnitt (15) an einem vierten Ende (64) der externen Sicherheitsbehälter-Anschlussleitung (13) gegenüber dem dritten Ende (63) davon, das an den dritten Verbindungsanschluss (10c) angeschlossen ist, angeordnet ist.

7. Haupt-Dampfsicherheitsventil-Druckentlastungs-Antriebsvorrichtung (120) zum Antreiben einer Haupt-Dampfsicherheitsventil-Druckentlastung (6) zum Ausstoßen des Dampfes in einem Reaktordruckbehälter (1) in den Reaktorsicherheitsbehälter (4), wobei die Vorrichtung (120) Folgendes umfasst:
eine Haupt-Dampfsicherheitsventil-Druckentlastungs-Antriebsgasleitung (11), die an einem ersten Ende (61) davon an die Haupt-Dampfsicherheitsventil-Druckentlastung (6) angeschlossen ist, um erstes Antriebsgas zu der Haupt-Dampfsicherheitsventil-Druckentlastung (6) zu leiten;
ein elektromagnetisches Dreiweg-Ventil (10), das im Reaktorsicherheitsbehälter (4) angeordnet ist, um am ersten Verbindungsanschluss (10a) davon an ein zweites Ende (62) der Haupt-Dampfsicherheitsventil-Druckentlastungs-Antriebsgasleitung (11) gegenüber dem ersten Ende (61) angeschlossen zu werden;
eine Antriebsgaszuleitung (12), die an einen zweiten Verbindungsanschluss (10b) des elektromagnetischen Dreiweg-Ventils (10) angeschlossen ist, um erstes Antriebsgas aus einer Versorgungsquelle davon zuzuführen; und
eine externe Sicherheitsbehälter-Anschlussleitung (13), die an einem dritten Ende (63) davon an den dritten Verbindungsanschluss (10c) des elektromagnetischen Dreiweg-Ventils (10) angeschlossen ist und zur Außenseite des Reaktorsicherheitsbehälters (4) mittels eines Eindringabschnitts des Reaktorsicherheitsbehälters (4) verläuft; wobei
das elektromagnetische Dreiweg-Ventil (10) entweder in den ersten Kommunikationszustand, in welchem der erste Verbindungsanschluss (10a) nicht mit dem dritten Verbindungsanschluss (10c) kommuniziert, aber mit dem zweiten Verbindungsanschluss (10b) kommuniziert, oder in den zweiten Kommunikationszustand, in welchem der erste Verbindungsanschluss (10a) nicht mit dem zweiten Verbindungsanschluss (10b) kommuniziert, aber mit dem dritten Verbindungsanschluss (10c) kommuniziert, schaltbar ist;
die externe Sicherheitsbehälter-Anschlussleitung (13) Folgendes aufweist:
einen offenen Kommunikationsabschnitt (14), der entweder an der Innenseite oder an der Außenseite des Reaktorsicherheitsbehälters (4) gebildet ist, um offen zu sein, wenn die Kernreaktoranlage im Normalbetrieb ist, und in einen geschlossenen Zustand versetzt werden zu können, und
einen externen Gasaufnahmeabschnitt (15), der fähig ist, zweites Antriebsgas von außerhalb des Reaktorsicherheitsbehälters (4) aufzunehmen.

## Revendications

1. Système de dépressurisation de cuve de réacteur (110) permettant de réduire la pression dans une installation à réacteur nucléaire, le système (110) comprenant :
une cuve de réacteur (1) contenue dans une enveloppe de confinement de réacteur (4), et
une soupape de sûreté et de décharge de vapeur principale (6) agencée dans l'enveloppe de confinement de réacteur (4) pour décharger de la vapeur de la cuve de réacteur (1) dans l'enveloppe de confinement de réacteur (4) en cas d'état anormal de l'installation à réacteur nucléaire ;
une conduite de gaz propulseur (11) menant à la soupape de sûreté et de décharge de vapeur principale raccordée, par une première extrémité (61), à la soupape de sûreté et de décharge de vapeur principale (6) afin de conduire un premier gaz propulseur à la soupape de sûreté et de décharge de vapeur principale (6) ;
une soupape électromagnétique à trois voies (10) agencée dans l'enveloppe de confinement de réacteur (4) de manière à être raccordée, par une première embouchure de raccord (10a), à une deuxième extrémité (62) de la conduite de gaz propulseur (11) menant à la soupape de sûreté et de décharge de vapeur principale, ladite extrémité étant située à l'opposé de la première extrémité (61) ;
une conduite d'amenée de gaz propulseur (12) raccordée à une deuxième embouchure de raccord (10b) de la soupape électromagnétique à trois voies (10) pour apporter le premier gaz propulseur issu d'une source d'alimentation ; et
une conduite de liaison externe d'enveloppe de confinement (13) raccordée par une troisième extrémité (63) à une troisième embouchure de raccord (10c) de la soupape électromagnétique à trois voies (10) et se prolongeant vers l'extérieur de l'enveloppe de confinement de réacteur (4) en passant par une section de pénétration de l'enveloppe de confinement de réacteur (4) ; dans lequel
la soupape électromagnétique à trois voies (10) est susceptible de passer soit dans un premier état de communication dans lequel la première embouchure de raccord (10a) ne communique pas avec la troisième embouchure de raccord (10c) mais communique avec la deuxième embouchure de raccord (10b), soit dans un deuxième état de communication dans lequel la première embouchure de raccord (10a) ne communique pas avec la deuxième embouchure de raccord (10b) mais communique avec la troisième embouchure de raccord (10c), et se trouve dans le deuxième état de communication lorsque l'installation à réacteur nucléaire est en cours d'exploitation normale ;
la conduite de liaison externe d'enveloppe de confinement (13) présente :
une section de communication ouverte (14) constituée soit à l'intérieur, soit à l'extérieur de l'enveloppe de confinement de réacteur (4) de manière à être ouverte pendant une exploitation normale de l'installation à réacteur nucléaire et apte à passer dans un état de fermeture, et
une section de réception de gaz externe (15) apte à recevoir un deuxième gaz propulseur issu d'une source de pressurisation (50) extérieure à l'enveloppe de confinement de réacteur (4), et
la soupape de sûreté et de décharge de vapeur principale (6) peut être ouverte sous l'effet de l'apport du deuxième gaz propulseur issu de la source de pressurisation (50) lorsque la section de communication ouverte (14) n'est pas ouverte et se trouve dans le deuxième état de communication.

2. Système de dépressurisation de cuve de réacteur (110) selon la revendication 1, dans lequel
la section de réception de gaz externe (15) est agencée à une quatrième extrémité (64) de la conduite de liaison externe d'enveloppe de confinement (13), laquelle extrémité est opposée à sa troisième extrémité (63) qui est raccordée à la troisième embouchure de raccord (10c), et
la section de communication ouverte (14) se situe à la quatrième extrémité (64) de la conduite de liaison externe d'enveloppe de confinement (13).

3. Système de dépressurisation de cuve de réacteur (110) selon la revendication 1, dans lequel
la section de réception de gaz externe (15) est agencée à une quatrième extrémité (64) de la conduite de liaison externe d'enveloppe de confinement (13), laquelle extrémité est opposée à sa troisième extrémité (63) qui est raccordée à la troisième embouchure de raccord (10c) ;
la section de communication ouverte (14) est agencée à l'extérieur de l'enveloppe de confinement de réacteur (4) ; et
le système (110) comprend en outre :
une conduite ouverte (21) raccordée à la section de communication ouverte (14) et se prolongeant à l'intérieur de l'enveloppe de confinement de réacteur (4) de manière à être ouverte à l'intérieur de l'enveloppe de confinement de réacteur (4), et
une soupape d'arrêt d'ouverture (23) agencée sur une partie de la conduite ouverte (21) qui est située à l'extérieur de l'enveloppe de confinement de réacteur (4).

4. Système de dépressurisation de cuve de réacteur (110) selon la revendication 1, dans lequel
la section de réception de gaz externe (15) est agencée à une quatrième extrémité (64) de la conduite de liaison externe d'enveloppe de confinement (13), laquelle extrémité est opposée à sa troisième extrémité (63) qui est raccordée à la troisième embouchure de raccord (10c) ;
la section de communication ouverte (14) est agencée à l'extérieur de l'enveloppe de confinement de réacteur (4) ; et
le système (110) comprend en outre :
une conduite ouverte (21) raccordée à la section de communication ouverte (14) et se prolongeant à l'intérieur de l'enveloppe de confinement de réacteur (4) de manière à être ouverte à l'intérieur de l'enveloppe de confinement de réacteur (4) ; et
une soupape de sectionnement automatique (31) agencée sur la conduite ouverte (21) de manière à se fermer d'elle-même tandis que la pression augmente en amont.

5. Système de dépressurisation de cuve de réacteur (110) selon la revendication 1, dans lequel
la section de réception de gaz externe (15) est agencée à une quatrième extrémité (64) de la conduite de liaison externe d'enveloppe de confinement (13), laquelle extrémité est opposée à sa troisième extrémité (63) qui est raccordée à la troisième embouchure de raccord (10c) ;
le système (110) comprend en outre :
une conduite ouverte (43) raccordée à la section de communication ouverte (14) et maintenue ouverte à l'intérieur de l'enveloppe de confinement de réacteur (4) ;
une soupape de sectionnement de type à pression (42) agencée sur la conduite ouverte (43) de manière à se fermer tandis que la pression du deuxième gaz propulseur augmente ;
une soupape de sûreté (41) agencée entre la section de communication ouverte (14) et la section de réception de gaz externe (15) de la conduite de liaison externe d'enveloppe de confinement (13) et configurée pour s'ouvrir sous l'effet de la pression issue de la section de réception de gaz externe (15) ; et
une conduite de commande de soupape de sectionnement (44) reliant la conduite de liaison externe d'enveloppe de confinement (13), comprise entre la soupape de sûreté (41) et la section de réception de gaz externe (15), et la section de commande de la soupape de sectionnement de type à pression (42).

6. Système de dépressurisation de cuve de réacteur (110) selon la revendication 1, dans lequel la section de communication ouverte (14) est constituée à l'intérieur de l'enveloppe de confinement de réacteur (4) ; et la section de réception de gaz externe (15) est agencée à une quatrième extrémité (64) de la conduite de liaison externe d'enveloppe de confinement (13), laquelle extrémité est opposée à sa troisième extrémité (63) raccordée à la troisième embouchure de raccord (10c).

7. Appareil de commande de soupape de sûreté et de décharge de vapeur principale (120) destiné à commander une soupape de sûreté et de décharge de vapeur principale (6) pour décharger la vapeur d'une cuve de réacteur (1) dans l'enveloppe de confinement de réacteur (4), l'appareil (120) comprenant :
une conduite de gaz propulseur (11) menant à la soupape de sûreté et de décharge de vapeur principale raccordée, par une première extrémité (61), à la soupape de sûreté et de décharge de vapeur principale (6) afin de conduire le premier gaz propulseur à la soupape de sûreté et de décharge de vapeur principale (6) ;
une soupape électromagnétique à trois voies (10) agencée dans l'enveloppe de confinement de réacteur (4) de manière à être raccordée par sa première embouchure de raccord (10a) à une deuxième extrémité (62) de la conduite de gaz propulseur (11) menant à la soupape de sûreté et de décharge de vapeur principale, ladite extrémité étant opposée à la première extrémité (61) ;
une conduite d'amenée de gaz propulseur (12) raccordée à une deuxième embouchure de raccord (10b) de la soupape électromagnétique à trois voies (10) pour apporter le premier gaz propulseur issu d'une source d'alimentation ; et
une conduite de liaison externe d'enveloppe de confinement (13) raccordée par une troisième extrémité (63) à la troisième embouchure de raccord (10c) de la soupape électromagnétique à trois voies (10) et se prolongeant vers l'extérieur de l'enveloppe de confinement de réacteur (4) en passant par une section de pénétration de l'enveloppe de confinement de réacteur (4) ; dans lequel
la soupape électromagnétique à trois voies (10) est susceptible de passer soit dans le premier état de communication dans lequel la première embouchure de raccord (10a) ne communique pas avec la troisième embouchure de raccord (10c) mais communique avec la deuxième embouchure de raccord (10b), soit dans le deuxième état de communication dans lequel la première embouchure de raccord (10a) ne communique pas avec la deuxième embouchure de raccord (10b) mais communique avec la troisième embouchure de raccord (10c) ;
la conduite de liaison externe d'enveloppe de confinement (13) présente :
une section de communication ouverte (14) constituée soit à l'intérieur, soit à l'extérieur de l'enveloppe de confinement de réacteur (4) de manière à être ouverte lorsque l'installation à réacteur nucléaire est en cours d'exploitation normale et apte à passer dans un état de fermeture ; et
une section de réception de gaz externe (15) apte à recevoir un deuxième gaz propulseur issu de l'extérieur de l'enveloppe de confinement de réacteur (4).
